# EUROPÄISCHE PATENTSCHRIFT

(11) **EP 2 873 517 B1**
(45) Veröffentlichungstag und Bekanntmachung des Hinweises auf die Patenterteilung: **24.04.2019**
(21) Anmeldenummer: 13005353.1
(22) Anmeldetag: 14.11.2013
(51) Int. Cl.: B29C 70/54, B29B 11/16, B29C 35/02, B29C 65/00, B29C 65/08, B29K 105/10, B29K 101/12

(54) **Stabilisierungsvorrichtung, Stabilisierungsverfahren und Verfahren zum erzeugen von Faserverbund-Bauteilen**
Stabilising device, stabilising process and method for producing fibre compound components
Dispositif de stabilisation, procédé de stabilisation et procédé de production d'éléments en fibres composites

(43) Veröffentlichungstag der Anmeldung: 20.05.2015
(73) Patentinhaber: Airbus Defence and Space GmbH, 85521 Ottobrunn (DE)
(72) Erfinder: Arold, Bettina, 21682 Stade (DE); Neumann, Ulf Henning, 21075 Hamburg (DE); Seefried, Hermann, 86757 Birkhausen (DE)
(74) Vertreter: Kastel, Stefan

(56) Entgegenhaltungen:
- EP-A1- 2 439 054
- WO-A1-92/05023
- WO-A1-2009/130087
- US-A1- 2010 078 845
- US-A1- 2012 234 489

## Beschreibung

Die Erfindung betrifft ein Verfahren zum Erzeugen von Faserverbund-Bauteilen mit einer offenen Struktur, bei dem ein mit einer Stabilisierungsvorrichtung durchführbares Stabilisierungsverfahren durchgeführt wird.

Es ist bekannt, Faserbündel in einer gewünschten dreidimensionalen Form auf einem formgebenden Werkzeug abzulegen. Beispielsweise werden insbesondere bei Flechtprozessen einzelne Fasern auf einem sogenannten Flechtkern als formgebendem Werkzeug abgelegt, um so eine geschlossene Kontur zu bilden. So lange die Fasern sich auf dem Flechtkern befinden, bilden sie eine stabile Kontur, beispielsweise die Kontur eines zu erzeugenden Bauteils, sind jedoch nicht so stabil miteinander verbunden, dass sie ohne Weiteres von dem Flechtkern entformt beziehungsweise entfernt werden können, ohne die durch den Flechtprozess erzeugte Kontur zu verlieren. Dies gilt auch für andere Verfahren, bei denen Faserbündel in dreidimensionaler Form auf oder an einem formgebenden Werkzeug angebracht worden sind. Daher werden die erzeugten Faserlagen stabilisiert.

Bekannt ist es, beispielsweise einen Ofenprozess durchzuführen, so lange sich die Fasern noch auf dem formgebenden Werkzeug befinden. Alternativ können auch manuelle Prozesse wie beispielsweise die Anwendung eines Bügeleisens verwendet werden, um eine thermische Stabilisierung der Flechtlagen zu erreichen.

Aus US 2012/0085480 A1 ist es bekannt, flächige Gewebe beziehungsweise Gelege aus Fasermaterialien durch Beaufschlagung mit Ultraschall und Druck zu einer Preform zu konsolidieren.

Aus der US 2012/0234489 A1 ist eine Stabilisierungsvorrichtung bekannt, mittels der ein Fasergelege auf einem formgebenden Werkzeug als Druckunterlage im Bereich einer Umbiegung mittels einer Rolle angepresst werden kann. Es ist auch erwähnt, dass anstelle der Rolle eine Sonotrode verwendet werden kann.

Die bekannten Stabilisierungsverfahren wie beispielsweise der Ofen-Prozess oder die Verwendung von manuellen Verfahren sind entweder diskontinuierlich und somit nicht automatisierbar oder resultieren zusätzlich in hohen Prozesszeiten.

Aufgabe der Erfindung ist es daher, ein verbessertes Verfahren zum Erzeugen von Faserverbund-Bauteilen mit einer offenen Struktur vorzuschlagen.

Diese Aufgabe wird durch ein Verfahren mit den Schritten des Anspruches 1 gelöst.

Vorteilhafte Ausgestaltungen der Erfindung sind Gegenstand der abhängigen Ansprüche.

Die Erfindung schafft ein Verfahren zum Erzeugen eines trockenen Faserverbund-Bauteils (68) mit einer offenen Struktur, aufweisend die Schritte:
a) Bereitstellen einer Stabilisierungseinrichtung mit wenigstens einer Sonotrode (14) und einem formgebenden Werkzeug (12);
b) Bilden von wenigstens einer Faserlage (16) durch Ablage einzelner Trockenfasern (18) an dem formgebenden Werkzeug (12);
c) Vorsehen von Bindermaterial (20) in und/oder an der Faserlage(16);
d) kontinuierliches Durchführen eines Stabilisierungsverfahrens zum Stabilisieren von der auf dem formgebenden Werkzeug (12) gebildeten, das Bindermaterial (20) aufweisenden, Faserlage (16) mit den Schritten
   d1) kontinuierliches Verfahren des formgebenden Werkzeugs (12) relativ zu der Sonotrode (14); und
   d2) Aufbringen von Ultraschallenergie auf die Faserlage (16); und
e) Entformen der konsolidierten Faserlage (16) im nicht-infusionierten Zustand.

Das Stabilisierungsverfahren wird bevorzugt mit einer Stabilisierungsvorrichtung durchgeführt.

Eine vorzugsweise bei dem Verfahren verwendete Stabilisierungsvorrichtung zum Stabilisieren der wenigstens einen auf dem formgebenden Werkzeug gebildeten, das Bindermaterial aufweisende Faserlage weist eine Konsolidierungseinrichtung mit wenigstens einer Sonotrode zum Aufbringen von Ultraschallenergie auf die Faserlage und das formgebende Werkzeug zum Positionieren der Faserlage in einer vorbestimmten Position relativ zu der Sonotrode auf.

Wird nun mit der Sonotrode Ultraschallenergie auf die Fasern aufgebracht, beginnen die Fasern zu vibrieren, was zu einem schnellen Aufheizen der Faserlage führt. Das in oder an der Faserlage vorhandene Bindermaterial ist insbesondere ein thermoplastisches Bindermaterial, das durch die entstehende Wärme aktiviert wird und so die Faserlage auf dem formgebenden Werkzeug stabilisiert.

Das formgebende Werkzeug ist vorzugsweise derart ausgebildet, dass es die Faserlage in einer vorbestimmten Position relativ zu der Sonotrode positionieren kann, wodurch ein automatisierbares Stabilisierungsverfahren ermöglicht wird, das zudem kontinuierlich, beispielsweise bis zum Ende eines Flechtprozesses zum Erzeugen einer Bauteilkontur, durchgeführt werden kann.

Alternativ kann jedoch auch die Sonotrode relativ zu dem formgebenden Werkzeug positionierbar sein.

Bevorzugt ist das formgebende Werkzeug aus Stahl, Aluminium, Holz oder CFK gebildet, und die Faserlage weist vorteilhaft Kohlenstofffasern, Aramidfasern und/oder Glasfasern auf.

In vorteilhafter Ausgestaltung ist das formgebende Werkzeug ein Flechtkern. Es kann sich dabei aber auch um Formen für Gelege, Drapierungen, Wickellagen und Gewebe aus Faserbündeln handeln.

Durch eine thermische Stabilisierung wird es möglich, nicht nur, wie bekannt, flächige textile Gebilde wie Gewebe oder Gelege (vgl. US 2012/0085480 A1), sondern dreidimensionale, in sich geschlossene Konturen thermisch zu stabilisieren, bevor sie von dem formgebenden Grundkörper, insbesondere beispielsweise von einem Flechtkern, entformt werden.

Es ist dabei vorteilhaft nicht nur möglich, einzelne Faserlagen zu stabilisieren, sondern vielmehr können auch mehrere beispielsweise übereinander geflochtene Faserlagen gegeneinander stabilisiert werden.

Bevorzugt weist die bei dem Verfahren verwendete Konsolidierungseinrichtung eine Druckbeaufschlagungseinrichtung zum Beaufschlagen der Faserlage mit Druck auf. Dabei ist es besonders bevorzugt, wenn die Faserlage gleichzeitig zum Beaufschlagen mit Ultraschallenergie auch mit Druck beaufschlagt wird. Es kann so vorteilhaft neben der Stabilisierung der Fasern auch eine Kompaktierung erzielt werden, so dass die Enddicke der erzeugten Preform vorteilhaft eine ähnliche Dicke aufweist wie die, die im späteren Bauteil erwünscht ist.

Vorteilhaft weist die bei einer Ausgestaltung des Verfahrens verwendete Druckbeaufschlagungseinrichtung das die Faserlage aufweisende formgebende Werkzeug als Druckunterlage und die Sonotrode als Druckwerkzeug auf. Somit wirkt vorteilhaft das formgebende Werkzeug als Amboss, so dass im Vergleich zu bekannten Verfahren der Kompaktierung, siehe beispielsweise US 2012/0085480 A1, auf einen externen Amboss verzichtet werden kann. Wird weiter vorteilhaft die Sonotrode als Druckwerkzeug verwendet, das heißt als das Element, mit dem auf die Faserlage zum Kompaktieren aufgedrückt wird, kann ebenfalls vorteilhaft auf ein externes Element zur Druckbeaufschlagung verzichtet werden.

Es ist bevorzugt möglich, das Aufbringen von Druck und Ultraschall sowie das Positionieren der Faserlage relativ zu der Sonotrode gleichzeitig durchzuführen. Dies erleichtert bevorzugt einen automatisierten Aufbau und trägt vorteilhaft dazu bei, dass die Stabilisierung und Kompaktierung der Fasern kontinuierlich durchgeführt werden kann.

Vorzugsweise weist die bei dem Verfahren verwendete Druckbeaufschlagungseinrichtung eine Drucksteuerungseinrichtung auf, um die Sonotrode definiert auf die Faserlage andrücken zu können. Insbesondere ist die Drucksteuerungseinrichtung mit Proportionalventilen gebildet. Durch die Proportionalventile wird vorteilhaft ein pneumatisches Andrücken der Sonotrode beispielsweise an die Flechtlage ermöglicht. Es können jedoch alle bekannten und geeigneten Verfahren und Vorrichtungen zum Andrücken der Sonotrode an die Faserlage verwendet werden.

So ist es vorteilhaft möglich, eine konstante Schweißkraft auf die Faserlage beziehungsweise Faserlagen aufzubringen, um so vorzugsweise eine kontinuierliche Stabilisierung und Kompaktierung der Fasern zu ermöglichen. Durch Aufbringen von Druck auf eine Mehrzahl von Faserlagen werden diese vorteilhaft miteinander verschweißt, um so eine bevorzugte Preform zum Bilden eines Faserverbund-Bauteils zu erzeugen.

Vorteilhaft ist eine Vorschubeinrichtung zum Verschieben des formgebenden Werkzeugs und der Sonotrode relativ zueinander vorgesehen. Besonders bevorzugt ist diese zum kontinuierlichen Verschieben des formgebenden Werkzeugs relativ zu der Sonotrode ausgebildet.

Alternativ kann jedoch auch die Sonotrode zu einem feststehenden formgebenden Werkzeug verschoben werden.

Es wird vorteilhaft eine Bewegung von formgebendem Werkzeug und Sonotrode relativ zueinander realisiert.

Damit kann vorteilhaft eine kontinuierliche Konsolidierung und Kompaktierung der Faserlage beziehungsweise der Faserlagen durch die Sonotrode erzielt werden, wobei der Prozess weiterhin vorteilhaft automatisch durchführbar ist.

Bevorzugt ist eine Kühleinrichtung zum Kühlen der Sonotrode vorgesehen, so dass das Bindermaterial, das durch die Sonotrode aktiviert wird, vorteilhaft rasch abgekühlt und verfestigt werden kann.

In besonders bevorzugter Ausgestaltung ist die bei bei dem Verfahren verwendete Sonotrode zur Anpassung ihrer Position relativ zu einer Oberflächenstruktur der Faserlage schwimmend gelagert. Es ist damit möglich, bevorzugt flexible Faserlagengeometrien zu prozessieren, da die Sonotrode keine räumlich feste Anordnung relativ zum formgebenden Werkzeug aufweist, sondern flexibel gelagert ist, wodurch vorteilhaft unterschiedliche dreidimensionale Strukturen von der Sonotrode überfahren werden können.

Vorzugsweise weist die bei dem Verfahren verwendete Sonotrode eine reibungsarme Beschichtung zumindest an der Sonotrodenfläche auf, die mit der Faserlage in Kontakt gebracht wird. Alternativ oder zusätzlich kann auch eine Pufferfolienzuführeinrichtung vorgesehen sein, die eine Pufferfolie zwischen die Faserlage und die Sonotrode führt. Vorteilhaft kann so eine Oberflächenschädigung beziehungsweise Fehlorientierung der Fasern während des Kontakts mit der Sonotrode vermieden werden.

Bevorzugt wird wenigstens eine Radialsonotrode zum Umschließen einer Seite und wenigstens eines Kantenbereichs des formgebenden Werkzeugs vorgesehen. Vorteilhaft kann so eine kontinuierliche Verfestigung in Kantenbereichen der Faserlage erzielt werden.

Bevorzugt werden paarweise an gegenüberliegenden Seiten des formgebenden Werkzeugs angeordnete Sonotroden, insbesondere mehrere um das formgebende Werkzeug zueinander versetzt angeordnete Paare von Sonotroden, vorgesehen, um vorteilhaft mehrere gegenüberliegende Bereiche des formgebenden Werkzeugs gleichzeitig konsolidieren und kompaktieren zu können.

Bevorzugt wird eine Steuereinrichtung zum Steuern der Drucksteuerungseinrichtung und/oder der Vorschubeinrichtung und/oder der Sonotrode vorgesehen. So kann bevorzugt eine vollautomatische Steuerung des Stabilisierungs- und Kompaktierungsprozesses erzielt werden.

Die Steuereinrichtung ist vorteilhaft zum Steuern der Ultraschallamplitude des von der Sonotrode ausgesendeten Ultraschalls, des Vorschubs des formgebenden Werkzeugs und der Schweißkraft, das heißt der Andrückkraft, die durch die Sonotrode auf die Faserlage ausgeübt wird, ausgebildet.

Das bei dem Verfahren verwendete Stabilisierungsverfahren zum Stabilisieren wenigstens einer auf einem formgebenden Werkzeug abgelegten, ein Bindermaterial aufweisenden Faserlage weist die folgenden Schritte auf:
a) Bereitstellen einer Stabilisierungseinrichtung mit wenigstens einer Sonotrode und einem die Faserlage aufweisenden formgebenden Werkzeug;
b) Verfahren des formgebenden Werkzeugs relativ zu der Sonotrode;
c) Aufbringen von Ultraschallenergie auf die Faserlage.

Das formgebende Werkzeug wird bevorzugt mit konstanter Vorschubgeschwindigkeit verfahren.

Vorteilhaft wird die Sonotrode insbesondere gleichzeitig zum Aufbringen der Ultraschallenergie auf die Faserlage auf die Faserlage aufgedrückt, um so vorteilhaft die Faserlage zu kompaktieren. Das Andrücken kann vorteilhaft pneumatisch erfolgen, es sind jedoch alle bekannten Verfahren möglich, die geeignet sind, die Sonotrode an die Faserlage anzudrücken.

Weiter vorteilhaft wird vor Aufdrücken der Sonotrode auf die Faserlage die Sonotrode mit einer reibungsarmen Beschichtung versehen. Alternativ oder zusätzlich kann auch zwischen Sonotrode und Faserlage eine Pufferfolie eingebracht werden, um so die noch trockenen Fasern vor Beschädigung und Fehlorientierung vorteilhaft zu schützen.

Besonders bevorzugt wird die Sonotrode gekühlt.

Ein Verfahren zum Erzeugen von Faserverbund-Bauteilen mit einer offenen Struktur weist die folgenden Schritte auf:
d) Bilden von wenigstens einer Faserlage auf einem formgebenden Werkzeug;
e) Vorsehen von Bindermaterial in und/oder an der Faserlage;
f) Durchführen des oben beschriebenen Stabilisierungsverfahrens;
g) Entformen, insbesondere Aufschneiden, der konsolidierten Faserlage.

Vorzugsweise werden in Schritt d) mehrere Faserlagen gebildet, insbesondere durch Flechten, Wickeln, Legen, Drapieren oder Weben von Fasern auf dem formgebenden Werkzeug und/oder durch Aufbringen von Verstärkungspatches auf eine geflochtene Faserlage und/oder durch Ansetzen oder Absetzen einer Faserlage und/oder einer Wickellage an die geflochtene Faserlage.

Bevorzugt wird das Bindermaterial interlaminar an die die Faserlage bildenden Fasern vorgesehen. Alternativ oder auch zusätzlich kann das Bindermaterial aber auch während des Bildens der Faserlage auf die Faserlage aufgebracht werden.

Ausführungsbeispiele der Erfindung werden nachfolgend anhand der beigefügten Zeichnungen näher erläutert. Darin zeigt:
- Fig. 1: eine erste Ausführungsform einer Stabilisierungsvorrichtung mit einer auf einem Flechtkern als formgebendem Werkzeug abgelegten Faserlage und mit mehreren Sonotroden;
- Fig. 2: einen Querschnitt durch die Stabilisierungsvorrichtung aus Fig. 1;
- Fig. 3: die Stabilisierungsvorrichtung aus Fig. 1 mit einer Pufferfolienzuführeinrichtung;
- Fig. 4: eine zweite Ausführungsform einer Stabilisierungsvorrichtung, aufweisend eine Radialsonotrode;
- Fig. 5: eine dritte Ausführungsform einer Stabilisierungsvorrichtung mit einem Roboter als Vorschubeinrichtung für eine Sonotrode;
- Fig. 6: eine erste Ansicht von einem auf einem formgebenden Werkzeug befindlichen Faserverbund-Bauteil;
- Fig. 7: das Faserverbund-Bauteil aus Fig. 6, entformt neben dem formgebenden Werkzeug liegend;
- Fig. 8: eine Ansicht auf die Außenseite des Faserverbund-Bauteils aus den Fig. 6 und 7;
- Fig. 9: eine Ansicht auf die Innenseite des Faserverbund-Bauteils aus den Fig. 6 bis 8; und
- Fig. 10: eine Querschnittsansicht auf das Faserverbund-Bauteil aus den Fig. 6 bis 9.

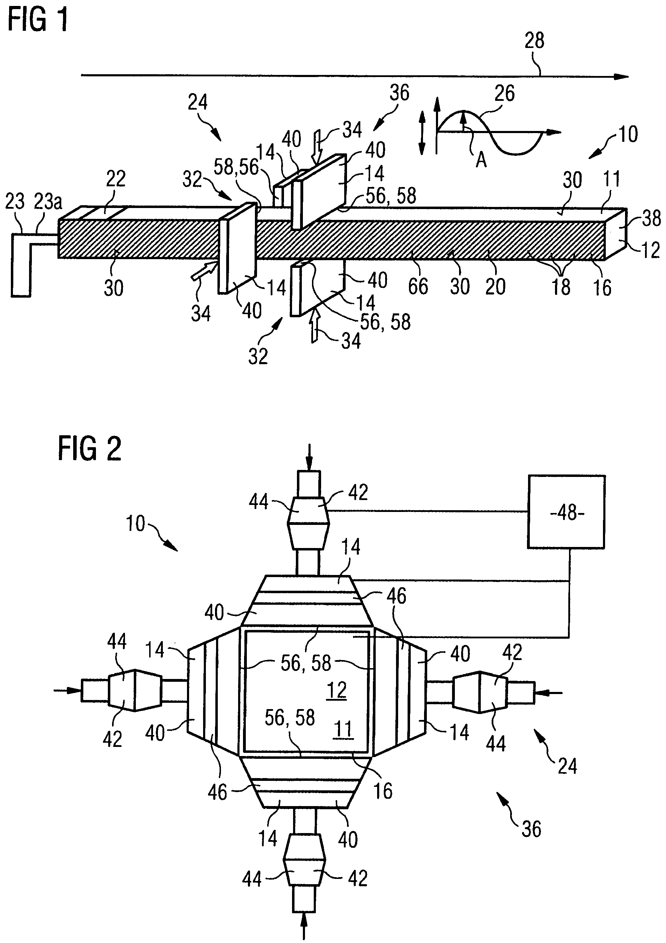

Fig. 1 zeigt eine erste beispielhafte Ausführungsform einer Stabilisierungsvorrichtung 10, die ein formgebendes Werkzeug 12, z.B. in Form eines Flechtkerns 11 und mehrere Sonotroden 14 aufweist. Auf dem formgebenden Werkzeug 12 ist eine Faserlage 16 aufgebracht, die beispielsweise durch Ablegen einzelner Fasern 18 oder Fasergelegen oder einem textilen Flächengewebe und zusätzliches Aufbringen von Bindermaterial 20 gebildet worden ist. Insbesondere ist die Faserlage 16 durch Flechten der Fasern 18 auf dem Flechtkern 11 aufgebracht.

Weiter ist auf der Faserlage 16 ein Verstärkungspatch 22 angeordnet, um die Faserlage 16 in diesem Bereich zu verstärken.

Das formgebende Werkzeug 12 ist dazu ausgelegt, die darauf befindliche Faserlage 16 in einer vorbestimmten Position relativ zu den Sonotroden 14 zu positionieren. Dazu wird das formgebende Werkzeug 12 von beispielsweise einem Roboter 23 als Vorschubeinrichtung 23a geführt. Alternativ ist es auch möglich, die Sonotroden 14 über ein feststehendes formgebendes Werkzeug 12 mit einem Roboter 23 zu führen.

Die Sonotroden 14 bilden eine Konsolidierungseinrichtung 24 und bringen Ultraschallenergie auf die Faserlage 16 auf. Dies ist durch die Schwingung 26 dargestellt, die im vorliegenden Ausführungsbeispiel eine beispielhafte Frequenz von 20 - 35 kHz und eine beispielhafte Amplitude von 16 - 22 µm aufweist. Das Verschieben der Faserlage 16 durch das formgebende Werkzeug 12 wird durch den Pfeil 28 verdeutlich.

Die Sonotroden 14 sind parallel zu Seitenflächen 30 des formgebenden Werkzeugs 12 angeordnet, wobei sich jeweils zwei Sonotroden 14 an gegenüberliegenden Seitenflächen 30 des formgebenden Werkzeugs 12 befinden, um so ein Paar 32 von Sonotroden 14 zu bilden. Aufeinanderfolgende Paare 32 sind im vorliegenden Beispiel dann um 90° zueinander versetzt angeordnet, um auch die obere und untere Seitenfläche 30 mit Ultraschall zu beaufschlagen.

Wie durch die Pfeile 34 angedeutet, werden die Sonotroden 14 auch auf die Seitenflächen 30 des formgebenden Werkzeugs 12 aufgedrückt, um so durch Druckbeaufschlagung die Faserlage 16 zusätzlich zu kompaktieren.

Fig. 2 zeigt eine Querschnittsansicht durch die Stabilisierungsvorrichtung 10 aus Fig. 1.

Die Sonotroden 14 bilden gemeinsam mit dem formgebenden Werkzeug 12 eine Druckbeaufschlagungseinrichtung 36. Dabei wirkt das formgebende Werkzeug 12 als Druckunterlage 38, das heißt als Gegenlage zu dem aufgebrachten Druck in Form eines Ambosses, während die Sonotroden 14 als Druckwerkzeuge 40 auf die Faserlage 16 aufgedrückt werden. Um die Sonotroden 14 vorteilhaft gleichmäßig und definiert auf die Faserlage 16 andrücken zu können, ist eine Drucksteuerungseinrichtung 42 vorgesehen, die Proportionalventile 44 aufweist. Über die Proportionalventile 44 kann dann definiert Druckluft eingebracht werden, um die Sonotroden 14 kontrolliert und definiert pneumatisch an die Faserlage 16 andrücken zu können. Es sind jedoch auch andere Verfahren bzw. Vorrichtungen einsetzbar, die ein kontrolliertes Andrücken der Sonotroden 14 an die Faserlage 16 ermöglichen.

Werden die Sonotroden 14 an die Faserlage 16 gedrückt und beaufschlagen die Faserlage 16 gleichzeitig mit Ultraschallenergie, wird das Bindermaterial 20, das in oder an der Faserlage 16 vorhanden ist, aktiviert, insbesondere erhitzt, um so die einzelnen Fasern 18 miteinander zu verbinden und so in ihrer Lage auf dem formgebenden Werkzeug 12 zu stabilisieren. Durch den Druck der Sonotroden 14 erfolgt gleichzeitig eine Kompaktierung der Faserlage 16, um so möglichst nahe an die gewünschte Endgeometrie heranzugelangen. Damit das Bindermaterial 20 nach Aktivierung möglichst schnell wieder verfestigt und so die Fasern 18 stabilisiert, weisen die Sonotroden 14 eine Kühleinrichtung 46 auf, die eine gleichzeitige Kühlung des Bindermaterials 20 bei Kontakt der Faserlage 16 mit den Sonotroden 14 ermöglicht.

Über das formgebende Werkzeug 12 wird die Faserlage 16 insbesondere durch Verschieben des formgebenden Werkzeugs 12 in eine vordefinierte Position relativ zu den Sonotroden 14 gebracht. Um die Konsolidierung, das heißt Stabilisierung und Kompaktierung der Faserlage 16, vollautomatisch zu ermöglichen, ist eine Steuereinrichtung 48 vorgesehen, die das Verschieben des formgebenden Werkzeugs 12, das Aufbringen des Ultraschalls durch die Sonotroden 14 und das Andrücken der Sonotroden 14 auf die Faserlage 16 steuert.

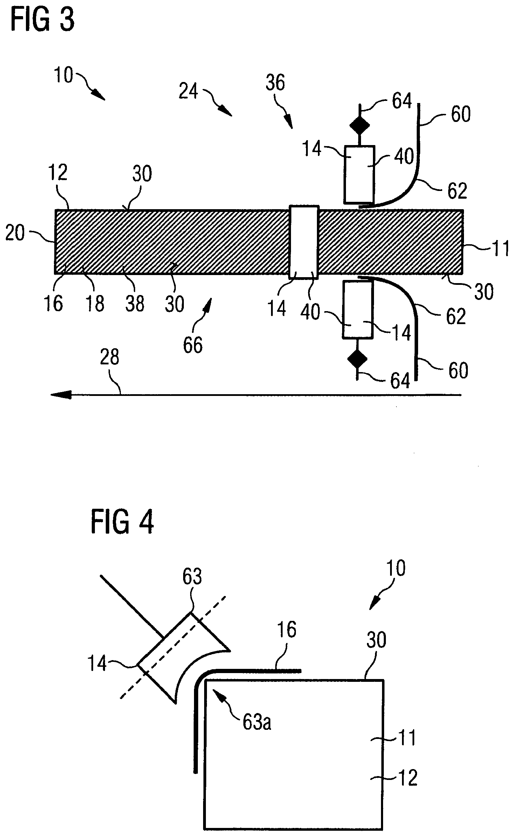

Fig. 3 zeigt die Stabilisierungsvorrichtung 10, wobei das formgebende Werkzeug 12 kontinuierlich zwischen den Sonotroden 14 entlanggeführt wird, wobei das Verfahren durch die Steuereinrichtung 48 vollautomatisch gesteuert wird.

Die in Fig. 1 und Fig. 2 gezeigten Sonotroden 14 weisen reibungsarme Beschichtungen 56 auf, die insbesondere an der Sonotrodenfläche 58 angeordnet sind, die in Kontakt mit der Faserlage 16 kommen.

In Fig. 3 ist alternativ eine Pufferfolienzuführeinrichtung 60 gezeigt, die eine Pufferfolie 62 zwischen die Faserlage 16 und die aufzudrückenden Sonotroden 14 führt. Sowohl durch die reibungsarme Beschichtung 56 als auch durch die Pufferfolie 62 wird die Faserlage 16 vor Beschädigungen geschützt, die beim Aufdrücken der Sonotroden 14 auf die Faserlage 16 entstehen könnten.

Fig. 4 zeigt eine zweite Ausführungsform einer Stabilisierungsvorrichtung 10, wobei als Sonotroden 14 eine Radialsonotrode 63 vorgesehen ist, die nicht an einer Seitenfläche 30 des formgebenden Werkzeugs 12 angeordnet ist, sondern einen Kantenbereich 63a des formgebenden Werkzeugs 12 umschließt. Mit einer solchen Sonotrode 14 ist es möglich, eine Stabilisierung und Konsolidierung nicht nur im Seitenflächenbereich 30 über dem formgebendes Werkzeug 12 zu erreichen, sondern insbesondere auch im Kantenbereich 63a des formgebenden Werkzeugs 12. Vorzugsweise rotiert die Radialsonotrode 63 um das formgebende Werkzeug 12.

Die Sonotroden 14 in den Figuren 1, 2 und 4 sind fest, das heißt unbeweglich, gelagert, während die Sonotroden 14 in Fig. 3 eine flexible Lagerung 64 aufweisen. So ist es möglich, dass die Sonotroden 14 sich der Kontur beziehungsweise Oberflächenstruktur 66 der Faserlage 16 während des Stabilisierungsprozesses selbständig anpassen können.

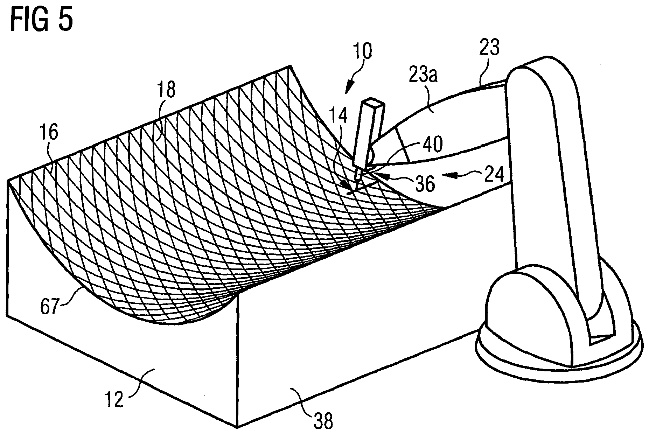

Fig. 5 zeigt eine dritte Ausführungsform einer Stabilisierungsvorrichtung 10, wobei das formgebende Werkzeug 12 durch eine Auflagefläche 67 für die Faserlage 16 gebildet ist. Die Sonotrode 14 wird hier von einem Roboter 23 geführt, während das formgebende Werkzeug 12 feststeht.

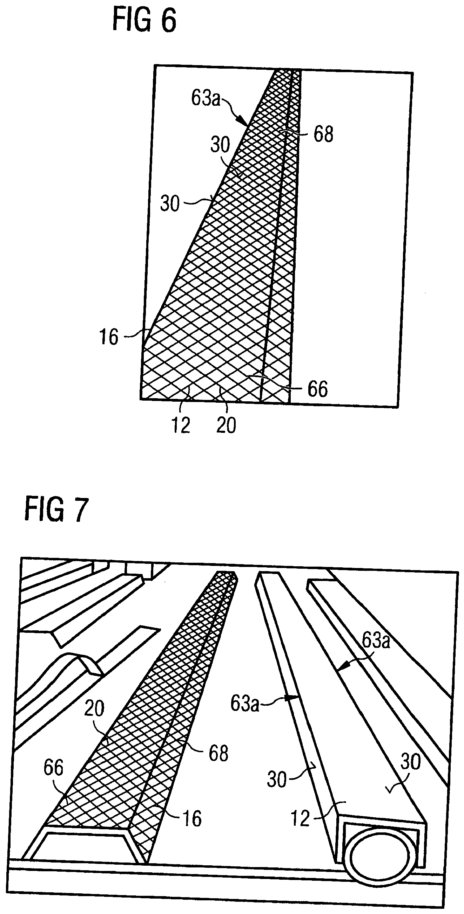

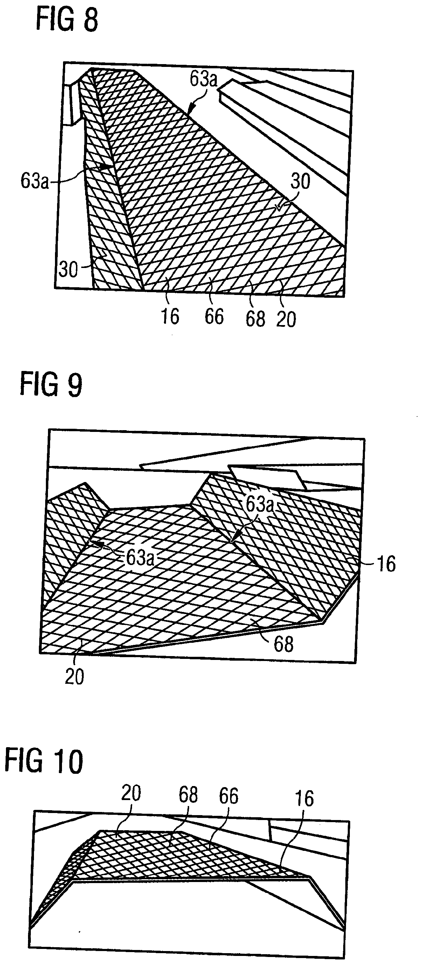

Die Figuren 6 bis 10 zeigen ein Faserverbund-Bauteil 68, das mit der beschriebenen Stabilisierungsvorrichtung 10 gebildet worden ist, nach Entformung vom formgebenden Werkzeug 12. Wie in den Figuren 6 und 7 zu sehen, wurde das Faserverbund-Bauteil 68 in dem Stabilisierungsprozess derart stabilisiert, konsolidiert und kompaktiert, dass es ohne Weiteres vom formgebenden Werkzeug 12 geschnitten werden kann, ohne dass die Fasern 18 ihre vorbestimmte Lage in dem Faserverbund-Bauteil 68 verlieren. Fig. 8 bis Fig. 10 zeigen jeweils Detailansichten des erzeugten Faserverbund-Bauteils 68, wobei in Fig. 8 eine Ansicht auf die Außenseite des Faserverbund-Bauteils 68, in Fig. 9 eine Ansicht auf die Innenseite des Faserverbund-Bauteils 68 und in Fig. 10 ein Querschnitt durch das Faserverbund-Bauteil 68 mit Sicht auf den Dickenbereich gezeigt sind.

Während beispielsweise eines Rundflechtprozesses werden einzelne Fasern 18 auf einem formgebendes Werkzeug 12 - dies kann beispielsweise ein sogenannter Flechtkern 11 oder ein anderes formgebendes Werkzeug, wie z. B. eine eine Formfläche aufweisende Schale oder Form, sein - abgelegt und bilden eine geschlossene Kontur. Sollen auf Basis dieses Prozesses trockene Bauteile 68 mit einer nicht-geschlossenen Kontur entstehen, d.h. die Bauteile 68 werden bereits im nicht-infusionierten Zustand aufgeschnitten, so ist es bevorzugt, wenn eine thermische Stabilisierung von Flechtlagen oder sonstigen erzeugen Faserlagen 16 möglichst unter Druck, stattfindet. Werden die Lagen 16 nicht stabilisiert, zerfallen sie beim Aufschneiden zurück in einzelne Fasern 18.

Dieser Prozess erfolgt bekannterweise mittels diskontinuierlichen oder manuellen Prozessen (Vakuumsack im Ofen; Bügeleisen). Bei Einbringung von Zusatzstoffen (z.B. Vliesen, Pulvern) ist es zusätzlich bevorzugt, wenn der Stabilisierungs- und Kompaktierungszyklus durchgeführt wird, um den Bulk-Faktor möglichst gering zu halten (d.h. die Enddicke der trockenen Preform möglichst ähnlich der Enddicke des späteren Bauteiles 68 ist).

Es wird daher ein kontinuierliches Kompaktieren und Stabilisieren insbesondere geflochtener Bauteile 68 durch Ultraschall vorgeschlagen.

Ein Ziel der hier beschriebenen Lehre ist es, eine Möglichkeit zu finden, geflochtene, gewickelte, gelegte, drapierte und vorzugsweise mehrlagige, Faserprofile (Kohlenstoff-, Aramid-, Glasfasern), welche durch thermoplastische Materialien unterstützt werden, in einem kontinuierlichen und automatisierten Prozess zu kompaktieren und stabilisieren, um ein Entformen des Bauteiles 68 vom formgebenden Werkzeug 12 in endkonturnaher Form zu ermöglichen. Dies wird durch die thermische Aktivierung des thermoplastischen Bindermaterials 20 realisiert. Dazu ist eine hohe Aufheizrate unter Benutzung eines diskreten Verdichtungsdruckes vorteilhaft.

Der eigentliche Prozess der Preformherstellung war bisher als diskontinuierlich und nicht automatisierbar anzusehen. Die thermische Aktivierung des Bindermateriales 20 wurde bisher zumeist durch den Einsatz von großen Umluftöfen realisiert oder es wurden manuelle Verfahren (z.B. die Nutzung von Bügeleisen) eingesetzt. Eine Vorkompaktierung wird dabei durch einen Vakuumaufbau, z.B. im VAP-Prozess, im Ofen bei max. -1 bar Unterdruck erreicht. Bei den manuellen Prozessen ist lediglich der Druck auf das Heizelement als Beitrag zur Vorkompaktierung anzusehen. Das Ultraschallverfahren wird bereits zur Verschweißung von Kunststoffen eingesetzt. Dies geschieht bisher aber in getakteten Prozessen. Erste Versuche der Ultraschallkompaktierung als kontinuierlicher Prozess an flächigen, d.h. nicht dreidimensional gebildeten, Geweben bzw. Gelegen wurden bereits durchgeführt, wie in US 2012/0085480 A1 beschrieben ist.

Der Ofenprozess ist diskontinuierlich und nicht automatisierbar, bringt einen hohen Materialaufwand mit sich und es ist keine Kompaktierung auf die Enddicke möglich, wodurch ein Autoklavprozess notwendig wird. Die Durchwärmung ist außerdem inhomogen, was zu einer Schädigung des Bindermaterials 20 führen kann. Ein Aufheizen des Kernmateriales ist notwendig, was bei unterschiedlicher Wärmeausdehnung kritisch ist und zur Ondulation führen kann. Weiter bringt der Ofenprozess nur geringe Prozessgeschwindigkeit mit sich von etwa > 2h/Bauteil 68.

Bei manuellen Prozessen ist es erforderlich, nach jeder Lage zu preformen, was hohe Prozesszeiten mit sich bringt. Auch hier kann nur inhomogen durchwärmt werden. Das Verfahren ist nicht automatisierbar.

Der bisher angewendete Ultraschall war nur lokal bzw. an einer Position anwendbar und erfolgte getaktet, d.h. diskontinuierlich. Es war ein externer Amboss erforderlich und es konnten nur einfache, flächige Strukturen erzeugt werden.

Hier wird nun das formgebende Werkzeug 12, welches aus verschiedenen Materialien bestehen kann (Stahl, Aluminium, CFK, Holz...), als Amboss, d.h. als Druckunterlage 38, verwendet, so dass eine mehrseitige, simultane Kompaktierung und Stabilisierung ohne externen Amboss möglich ist. Die erzeugte Vibration zwischen den Kohlenstofffasern 18 führt zu einem schnellen Aufheizen aus dem Inneren des Bauteiles 68 heraus, ohne dass es zu einer nennenswerten Erwärmung des Kernmateriales (Amboss) kommt. Durch die Nutzung von beispielsweise pneumatischen Proportionalventilen 44 kann eine konstante Schweißkraft und eine homogene Bauteildicke auf Endmaß erzeugt werden.

Die gezielte Nutzung von Sonotrodenbeschichtungen 56 und/oder mitlaufenden Pufferfolien 62 kann eine Oberflächenschädigung und Fehlorientierung der Trockenfasern 18 verhindern.

Durch das kontinuierliche "Überfahren" der Sonotroden 14 durch das Bauteil 68 kann die Prozesszeit signifikant verringert werden. Das "one-shot"-Verfahren ermöglicht vorteilhaft eine homogene und reproduzierbare Qualität.

Die offene Konstruktion und die schmalen Sonotrodengeometrien machen die Abbildung komplexer und gekrümmter Strukturen ohne Qualitätsverlust möglich.

Fig. 1 zeigt schematisch den Aufbau der Funktionseinheiten der Ultraschall-Preform-Anlage am Beispiel eines Flechtkerns 11 als formgebendes Werkzeug 12. Die Querschnittsansicht in Fig. 2 zeigt dabei das zentral geführte formgebende Werkzeug 12, welches die Amboss-Funktion übernimmt. Dieses ist mit mehreren Faserlagen 16, hier in Form von Flechtlagen, überspannt, welche interlaminare Binderstoffe 20 enthalten. Die Ultraschalleinheiten 14 werden mit einer konstanten Schweißkraft pneumatisch auf das Geflecht gepresst und aktivieren durch entstehende Reibungswärme das thermoplastische Bindermaterial 20 und realisieren somit die Stabilisierung des Profiles. Wie der Seitenansicht in Fig. 3 zu entnehmen ist, wird durch eine konstante Vorschubgeschwindigkeit, gezeigt durch den Pfeil 28, die Kontinuität in den Prozess integriert. Die Oberfläche des Bauteiles 68 wird dabei durch eine reibungsarme Beschichtung 56 auf den Sonotroden 14 oder eine Pufferfolie 62 vor Beschädigungen geschützt.

Um - zur Betrachtung eines einfachen Falles - einen geraden geflochtenen Kern zu preformen, wurde die Stabilisierungsvorrichtung 10 gemäß Fig. 1 aufgebaut und ein Flechtkern 11 als Amboss aus Aluminium im vorliegenden Beispiel mit einer Länge von 2400 mm mit mehreren Lagen 16, z.B. vier bis sechs Lagen 16, beflochten. Hier werden die beiden gegenüberliegenden Kernseiten 30 simultan konsolidiert. Dazu werden beide Funktionseinheiten, d.h. die Sonotroden 14, parallel zu den Kernseiten 30 ausgerichtet und der beflochtene Kern 11 mittels eines Roboters 23 als Vorschubeinrichtung 23a kontinuierlich zwischen den Sonotroden 14 entlanggeführt. Über die Steuereinrichtung 48 zur Steuerung von Generator und Pneumatik werden die notwendigen Parameter (Amplitude, Schweißkraft, Vorschub) geregelt, um das gewünschte Endergebnis zu erhalten. Somit lassen sich der Grad der Kompaktierung und die eingebrachte Temperatur flexibel anpassen.

Eine zusätzliche Kühlung 46 an den Sonotroden 14 führt zu einer raschen Abkühlung und Verfestigung des Bindermaterials 20.

Die Figuren 6 bis 10 zeigen das konsolidierte Material, welches auf Grund des Prozesses vom Kern 11 entfernt werden konnte, ohne dass es zu einer Zerstörung des Bauteiles 68 kommen konnte. Bei einem unkonsolidierten Bauteil 68 gäbe es zwischen den Trockenfasern 18 keine Anbindung, so dass es unmittelbar beim Aufschneiden zu einer Zerstörung des Geflechts kommt.

Um die Technologie weiter zu etablieren, können die Sonotroden 14 schwimmend angebracht werden, um sich der Kontur des Kernmaterials selbständig anpassen zu können. So ist es möglich, sehr komplexe und große Strukturen automatisiert zu preformen.

Weiterhin können bei Bedarf speziell geformte Radial-Sonotroden 63 für eine kontinuierliche Verfestigung in Kantenbereichen 63a eingesetzt werden.

Die Technologie kann für verschiedene Kernmaterialien eingesetzt werden. Hierzu zählen neben den guten Schwingungsträgern Aluminium und Stahl auch weiche Stoffe, wie z.B. Holz oder CFK. Auch ist es denkbar, verschiedenste Binder- und Fasermaterialien einzusetzen. Das große Prozessfenster lässt viele denkbare Kombinationen zu.

Weiterhin ist es möglich, diese Technologie zum automatisierten Aufbringen lokaler Faserverstärkungen einzusetzen (Verstärkungspatches 22) oder für das An- und Absetzen von Flechtlagen 16 oder/und Wickellagen (Ply drop). Es können damit beispielsweise auch mehrere bereits vorstabilisierte Preformen miteinander verbunden werden.

Es werden die folgenden Vorteile gegenüber bekannten Verfahren und Vorrichtungen erzielt:
- sehr hohe Prozessgeschwindigkeit (>2 m/min);
- hohe Oberflächengüte;
- automatisierbarer, kontinuierlicher Prozess;
- Enddickenkompaktierung, d.h. ein hoher Faservolumengehalt, es ist kein Autoklav mehr nötig;
- geringe Materialkosten (kein Vakuumaufbau);
- geringe Defektdichte;
- flexibel anpassbar für verschiedene Materialien;
- geringere Energiekosten;
- homogenes Werkstoffverhalten;
- Nutzung für gekrümmte (komplexe) Strukturen;
- Verwendbarkeit für verwandte Prozesse.

### Bezugszeichenliste:

- 10: Stabilisierungsvorrichtung
- 11: Flechtkern
- 12: formgebendes Werkzeug
- 14: Sonotrode
- 16: Faserlage
- 18: Faser
- 20: Bindermaterial
- 22: Verstärkungspatch
- 23: Roboter
- 23a: Vorschubeinrichtung
- 24: Konsolidierungseinrichtung
- 26: Schwingung
- 28: Pfeil
- 30: Seitenfläche
- 32: Paar
- 34: Pfeil
- 36: Druckbeaufschlagungseinrichtung
- 38: Druckunterlage
- 40: Druckwerkzeug
- 42: Drucksteuerungseinrichtung
- 44: Proportionalventil
- 46: Kühleinrichtung
- 48: Steuereinrichtung
- 56: Beschichtung
- 58: Sonotrodenfläche
- 60: Pufferfolienzuführeinrichtung
- 62: Pufferfolie
- 63: Radialsonotrode
- 63a: Kantenbereich
- 64: flexible Lagerung
- 66: Oberflächenstruktur
- 67: Auflagefläche
- 68: Faserverbund-Bauteil

## Patentansprüche

1. Verfahren zum Erzeugen eines trockenen Faserverbund-Bauteils (68) mit einer offenen Struktur, aufweisend die Schritte:
a) Bereitstellen einer Stabilisierungsvorrichtung (10) mit wenigstens einer Sonotrode (14) und einem formgebenden Werkzeug (12);
b) Bilden von wenigstens einer Faserlage (16) durch Ablage einzelner Trockenfasern (18) an dem formgebenden Werkzeug (12);
c) Vorsehen von Bindermaterial (20) in und/oder an der Faserlage (16);
d) kontinuierliches Durchführen eines Stabilisierungsverfahrens zum Stabilisieren von der auf dem formgebenden Werkzeug (12) gebildeten, das Bindermaterial (20) aufweisenden, Faserlage (16) mit den Schritten
d1) kontinuierliches Verfahren des formgebenden Werkzeugs (12) relativ zu der Sonotrode (14) und
d2) Aufbringen von Ultraschallenergie auf die Faserlage (16); und
e) Entformen der konsolidierten Faserlage (16) im nicht-infusionierten Zustand.

2. Verfahren nach Anspruch 1,
**dadurch gekennzeichnet, dass** die Sonotrode (14), insbesondere pneumatisch, auf die Faserlage (16) aufgedrückt wird.

3. Verfahren nach Anspruch 2,
**dadurch gekennzeichnet, dass** vor Aufdrücken der Sonotrode (14) auf die Faserlage (16) die Sonotrode (14) mit einer reibungsarmen Beschichtung (56) versehen wird und/oder dass zwischen Sonotrode (14) und Faserlage (16) eine Pufferfolie (62) eingebracht wird.

4. Verfahren nach einem der Ansprüche 1 bis 3,
**dadurch gekennzeichnet, dass** die Sonotrode (14) gekühlt wird.

5. Verfahren nach einem der Ansprüche 1 bis 4,
**dadurch gekennzeichnet, dass** in Schritt d) mehrere Faserlagen (16) gebildet werden, insbesondere durch Flechten von Fasern (18) auf dem formgebenden Werkzeug (12) und/oder durch Aufbringen von Verstärkungspatches (22) auf eine geflochtene Faserlage (16) und/oder durch Ansetzen einer Faserlage (16) und/oder einer Wickellage an die geflochtene Faserlage (16), und/oder dass in Schritt e) das Entformen durch Aufschneiden der konsolidierten Faserlage (16) durchgeführt wird.

6. Verfahren nach einem der Ansprüche 1 oder 5,
**dadurch gekennzeichnet, dass** das Bindermaterial (20) interlaminar an die Faserlage (16) bildenden Fasern (18) vorgesehen wird und/oder dass das Bindermaterial (20) während des Bildens der Faserlage (16) auf die Faserlage (16) aufgebracht wird.

7. Verfahren nach einem der voranstehenden Ansprüche,
**gekennzeichnet durch** Durchführen des Stabilisierungsverfahrens mittels der Stabilisierungsvorrichtung (10), die eine Konsolidierungseinrichtung (24) mit der wenigstens eine Sonotrode (14) zum Aufbringen von Ultraschallenergie auf die Faserlage (16) und mit dem formgebenden Werkzeug (12) zum Positionieren der Faserlage (16) in einer vorbestimmten Position relativ zu der Sonotrode (14) aufweist, wobei die Sonotrode (14) zur Anpassung ihrer Position relativ zu einer Oberflächenstruktur (66) der Faserlage (16) schwimmend gelagert ist.

8. Verfahren nach Anspruch 7,
**gekennzeichnet durch** Verwenden einer Konsolidierungseinrichtung (24), die eine Druckbeaufschlagungseinrichtung (36) zum Beaufschlagen der Faserlage (16) mit Druck aufweist.

9. Verfahren nach Anspruch 8,
**gekennzeichnet durch** Verwenden einer Druckbeaufschlagungseinrichtung (36), die das die Faserlage (16) aufweisenden formgebenden Werkzeug (12) als Druckunterlage (38) und die Sonotrode (14) als Druckwerkzeug (40) aufweist und/oder eine Drucksteuerungseinrichtung (42), insbesondere gebildet mit Proportionalventilen (44), zum definierten Andrücken der Sonotrode (14) auf die Faserlage (16) aufweist.

10. Verfahren nach einem der Ansprüche 7 bis 9,
**gekennzeichnet durch** Bereitstellung einer Stabilisierungsvorrichtung, bei der eine Vorschubeinrichtung (23a) zum Verschieben, insbesondere zum kontinuierlichen Verschieben, von formgebendem Werkzeug (12) und Sonotrode (14) relativ zueinander und/oder eine Kühleinrichtung (46) zum Kühlen der Sonotrode (14) vorgesehen ist.

11. Verfahren nach einem der Ansprüche 7 bis 10,
**gekennzeichnet durch** Verwenden einer Sonotrode (14), die eine reibungsarme Beschichtung (56) an einer mit der Faserlage (16) in Kontakt zu bringenden Sonotrodenfläche (58) aufweist und/oder einer Pufferfolienzuführeinrichtung (60) zum Zuführen einer Pufferfolie (62) zwischen die Faserlage (16) und die Sonotrode (14).

12. Verfahren nach einem der Ansprüche 7 bis 11,
**gekennzeichnet durch** Verwenden wenigstens einer Radialsonotrode (63) zum Umschließen einer Seitenfläche (30) und wenigstens eines Kantenbereichs (63a) des formgebenden Werkzeugs (12).

13. Verfahren nach einem der Ansprüche 7 bis 12,
**gekennzeichnet durch** Verwenden von paarweise an gegenüberliegenden Seitenflächen (30) des formgebenden Werkzeugs (12) angeordneten Sonotroden (14), insbesondere mehrerer um das formgebende Werkzeug (12) zueinander versetzt angeordneter Paare (32) von Sonotroden (14).

14. Verfahren nach einem der Ansprüche 7 bis 13,
**gekennzeichnet durch** Verwenden einer Stabilisierungsvorrichtung, bei der eine Steuereinrichtung (48) zum Steuern der Drucksteuerungseinrichtung (42) und/oder der Vorschubeinrichtung (50) und/oder der Sonotrode (14) vorgesehen ist.

## Claims

1. Method for producing a dry fibre composite component (68) with an open structure, comprising the steps of:
a) providing a stabilizing device (10) having at least one sonotrode (14) and a moulding tool (12);
b) forming at least one layer of fibres (16) by depositing individual dry fibres (18) on the moulding tool (12);
c) providing binder material (20) in and/or on the layer of fibres (16);
d) continuously carrying out a stabilizing method for stabilizing the layer of fibres (16) formed on the moulding tool (12) and comprising the binder material (20), with the steps of
d1) continuously moving the moulding tool (12) in relation to the sonotrode (14) and
d2) applying ultrasonic energy to the layer of fibres (16); and
e) demoulding the consolidated layer of fibres (16) in the non-infused state.

2. Method according to Claim 1,
**characterized in that** the sonotrode (14) is pressed onto the layer of fibres (16), in particular pneumatically.

3. Method according to Claim 2,
**characterized in that**, before pressing the sonotrode (14) onto the layer of fibres (16), the sonotrode (14) is provided with a low-friction coating (56) and/or **in that** a buffer film (62) is introduced between the sonotrode (14) and the layer of fibres (16).

4. Method according to one of Claims 1 to 3,
**characterized in that** the sonotrode (14) is cooled.

5. Method according to one of Claims 1 to 4,
**characterized in that**, in step d), a number of layers of fibres (16) are formed, in particular by braiding fibres (18) on the moulding tool (12) and/or by applying reinforcing patches (22) to a braided layer of fibres (16) and/or by applying a layer of fibres (16) and/or a lap layer to the braided layer of fibres (16), and/or **in that** in step e) the demoulding is carried out by cutting away the consolidated layer of fibres (16).

6. Method according to one of Claims 1 or 5,
**characterized in that** the binder material (20) is provided in an interlaminar manner on fibres (18) forming the layer of fibres (16) and/or **in that** the binder material (20) is applied to the layer of fibres (16) during the forming of the layer of fibres (16).

7. Method according to one of the preceding claims,
**characterized by** carrying out the stabilizing process by means of the stabilizing device (10), which comprises a consolidating device (24) with the at least one sonotrode (14) for applying ultrasonic energy to the layer of fibres (16) and with the moulding tool (12) for positioning the layer of fibres (16) in a predetermined position in relation to the sonotrode (14), wherein the sonotrode (14) is mounted in a floating manner for adapting its position in relation to a surface structure (66) of the layer of fibres (16).

8. Method according to Claim 7,
**characterized by** using a consolidating device (24), which comprises a pressure-applying device (36) for applying pressure to the layer of fibres (16).

9. Method according to Claim 8,
**characterized by** using a pressure-applying device (36), which comprises the moulding tool (12) with the layer of fibres (16) as a pressure base (38) and comprises the sonotrode (14) as a pressure tool (40) and/or comprises a pressure-controlling device (42), in particular formed with proportional valves (44), for pressing the sonotrode (14) onto the layer of fibres (16) in a defined manner.

10. Method according to one of Claims 7 to 9,
**characterized by** providing a stabilizing device, in which an advancing device (23a) is provided for displacing, in particular continuously displacing, the moulding tool (12) and the sonotrode (14) in relation to one another and/or a cooling device (46) is provided for cooling the sonotrode (14).

11. Method according to one of Claims 7 to 10,
**characterized by** using a sonotrode (14), which comprises a low-friction coating (56) on a sonotrode surface (58) to be brought into contact with the layer of fibres (16) and/or a buffer-film feeding device (60) for feeding a buffer film (62) between the layer of fibres (16) and the sonotrode (14).

12. Method according to one of Claims 7 to 11,
**characterized by** using at least one radial sonotrode (63) for enclosing a side face (30) and at least one edge region (63a) of the moulding tool (12).

13. Method according to one of Claims 7 to 12,
**characterized by** using sonotrodes (14) arranged in pairs at opposite side faces (30) of the moulding tool (12), in particular a number of pairs (32) of sonotrodes (14) arranged offset in relation to one another around the moulding tool (12).

14. Method according to one of Claims 7 to 13,
**characterized by** using a stabilizing device in which a controlling device (48) is provided for controlling the pressure-controlling device (42) and/or the advancing device (50) and/or the sonotrode (14).

## Revendications

1. Procédé de production d'un élément en fibres composites sec (68) présentant une structure ouverte, le procédé comprenant les étapes consistant à :
a) fournir un dispositif de stabilisation (10) doté d'au moins une sonotrode (14) et d'un outil de façonnage (12) ;
b) former au moins une couche de fibres (16) par dépose de fibres sèches (18) individuelles sur l'outil de façonnage (12) ;
c) prévoir un matériau liant (20) dans et/ou sur la couche de fibres (16) ;
d) mettre en oeuvre en continu un procédé de stabilisation pour stabiliser la couche de fibres (16) formée sur l'outil de façonnage (12) et comprenant le matériau liant (20), comprenant les étapes consistant à
d1) déplacer en continu l'outil de façonnage (12) par rapport à la sonotrode (14) et
d2) appliquer de l'énergie ultrasonore sur la couche de fibres (16) ; et
e) démouler la couche de fibres consolidée (16) à l'état non infusé.

2. Procédé selon la revendication 1,
**caractérisé en ce que** la sonotrode (14) est appliquée, en particulier de manière pneumatique, sur la couche de fibres (16).

3. Procédé selon la revendication 2,
**caractérisé en ce qu'**avant l'application de la sonotrode (14) sur la couche de fibres (16), la sonotrode (14) est dotée d'un revêtement (56) à faible friction et/ou **en ce qu'**un film tampon (62) est introduit entre la sonotrode (14) et la couche de fibres (16).

4. Procédé selon l'une des revendications 1 à 3,
**caractérisé en ce que** la sonotrode (14) est refroidie.

5. Procédé selon l'une des revendications 1 à 4,
**caractérisé en ce que** plusieurs couches de fibres (16) sont formées à l'étape d), en particulier par tressage de fibres (18) sur l'outil de façonnage (12) et/ou par application de pièces de renfort (22) sur une couche de fibres tressée (16) et/ou par application d'une couche de fibres (16) et/ou d'une couche d'enroulement sur la couche de fibres tressée (16), et/ou **en ce qu'**à l'étape e), le démoulage est effectué par découpe de la couche de fibres consolidée (16).

6. Procédé selon l'une des revendications 1 ou 5,
**caractérisé en ce que** le matériau liant (20) est situé de manière interlaminaire sur les fibres (18) formant la couche de fibres (16) et/ou **en ce que** le matériau liant (20) est appliqué sur la couche de fibres (16) pendant la formation de la couche de fibres (16).

7. Procédé selon l'une des revendications précédentes,
**caractérisé par** la mise en oeuvre du procédé de stabilisation au moyen du dispositif de stabilisation (10) qui comprend un dispositif de consolidation (24) doté de ladite au moins une sonotrode (14) servant à appliquer de l'énergie ultrasonore sur la couche de fibres (16) et de l'outil de façonnage (12) servant à positionner la couche de fibres (16) dans une position prédéterminée par rapport à la sonotrode (14), la sonotrode (14) étant montée flottante pour adapter sa position par rapport à une structure de surface (66) de la couche de fibres (16).

8. Procédé selon la revendication 7,
**caractérisé par** l'utilisation d'un dispositif de consolidation (24) qui comprend un dispositif d'application de pression (36) servant à soumettre la couche de fibres (16) à une pression.

9. Procédé selon la revendication 8,
**caractérisé par** l'utilisation d'un dispositif d'application de pression (36) qui comprend l'outil de façonnage (12) comprenant la couche de fibres (16) en tant que support de pression (38) et la sonotrode (14) en tant qu'outil de pression (40) et/ou d'un dispositif de régulation de pression (42), en particulier pourvu de soupapes proportionnelles (44), pour appliquer de manière définie la sonotrode (14) sur la couche de fibres (16) .

10. Procédé selon l'une des revendications 7 à 9,
**caractérisé par** la fourniture d'un dispositif de stabilisation, dans lequel sont prévus un dispositif d'avance (23a) servant à déplacer, en particulier à déplacer en continu, l'outil de façonnage (12) et la sonotrode (14) l'un par rapport à l'autre et/ou un dispositif de refroidissement (46) servant à refroidir la sonotrode (14).

11. Procédé selon l'une des revendications 7 à 10,
**caractérisé par** l'utilisation d'une sonotrode (14) qui comprend un revêtement (56) à faible friction sur une surface de sonotrode (58) à amener en contact avec la couche de fibres (16) et/ou d'un dispositif d'amenée de film tampon (60) servant à amener un film tampon (62) entre la couche de fibres (16) et la sonotrode (14).

12. Procédé selon l'une des revendications 7 à 11,
**caractérisé par** l'utilisation d'au moins une sonotrode radiale (63) pour entourer une surface latérale (30) et au moins une région de bord (63a) de l'outil de façonnage (12).

13. Procédé selon l'une des revendications 7 à 12,
**caractérisé par** l'utilisation de sonotrodes (14) disposées par paires sur des surfaces latérales (30) opposées de l'outil de façonnage (12), en particulier de plusieurs paires (32) de sonotrodes (14) disposées de manière décalée les unes par rapport aux autres autour de l'outil de façonnage (12) .

14. Procédé selon l'une des revendications 7 à 13,
**caractérisé par** l'utilisation d'un dispositif de stabilisation, dans lequel est prévu un dispositif de commande (48) servant à commander le dispositif de régulation de pression (42) et/ou le dispositif d'avance (50) et/ou la sonotrode (14).
